(19) Europäisches Patentamt
European Patent Office
Office européen des brevets

(11) Numéro de publication: **0 122 165**
**A1**

(12) **DEMANDE DE BREVET EUROPEEN**

(21) Numéro de dépôt: **84400424.2**

(22) Date de dépôt: **02.03.84**

(51) Int. Cl.[3]: **G 06 K 19/06**, G 07 F 7/00

(30) Priorité: **11.03.83 FR 8304052**

(43) Date de publication de la demande: **17.10.84 Bulletin 84/42**

(84) Etats contractants désignés: **CH DE GB IT LI**

(71) Demandeur: **SOCIETE D'ELECTRONIQUE DE LA REGION PAYS DE LOIRE SEREL, 74, rue du Surmelin, F-75020 Paris (FR)**

(72) Inventeur: **Guerri Dall'Oro, Guido, THOMSON-CSF SCPI 173, bld Haussmann, F-75379 Paris Cedex 08 (FR)**

(74) Mandataire: **Grynwald, Albert et al, THOMSON-CSF SCPI 173, Bld Haussmann, F-75379 Paris Cedex 08 (FR)**

(54) **Dispositif d'identification à codage numérique.**

(57) Dispositif d'identification à support d'informations et procédé de codage numérique d'informations sur un tel support.

Le support est réalisé sur une carte comprenant deux pistes distinctes (6, 7) comportant des zones codées sous forme de barres perpendiculaires à la direction des pistes. Chacune de ces pistes correspond à l'un des états logiques «0» ou «1» de l'information considérée. Une barre sur une piste (6) représente un «1» et une barre sur l'autre piste (7) représente un «0».

1 1 0 1 0 0 1 0
5
6
7
20
8

EP 0 122 165 A1

ACTORUM AG

DISPOSITIF D'IDENTIFICATION A CODAGE NUMERIQUE

La présente invention concerne un dispositif d'identification, un procédé de codage numérique d'informations pour un tel dispositif, et un dispositif d'autorisation du fonctionnement d'un appareil utilisant un tel dispositif d'identification.

L'invention concerne plus particulièrement un dispositif portatif de format par exemple rectangulaire, destiné à l'emmagasinement de données numériques codées de façon permanente.

De tels dispositifs d'information sont couramment utilisés pour de nombreuses applications parmi lesquelles on peut citer, à titre d'exemples non limitatifs : les cartes de paiement et/ou de crédit, les plaques d'identification ou d'autorisation, également connues sous le terme anglo-saxon de "badge", les titres de voyage ou analogues, etc... Les données emmagasinées sur de tels dispositifs peuvent être des données numériques codées sous une forme non lisible ou, plus généralement, non directement appréhendable par un être humain. Il s'agit d'un "code caché" par opposition à un "code en clair", tel que par exemple constitué par un texte imprimé de façon classique. Le support de ce dispositif peut être divisé en zones (par exemple des pistes) d'enregistrement distinctes. Outre les données numériques codées enregistrées, le support peut comporter des indications supplémentaires en "clair". Ces indications, portées sur le support par tout procédé approprié tel que imprimerie, gravure en relief, etc... peuvent être, les données d'identification du possesseur de la carte support d'information : nom, adresse, date de naissance, etc... ou des données concernant l'utilisation de la carte, telle que la date limite de validité.

Les procédés d'enregistrement-lecture des informations numériques codées sont divers : les plus couramment utilisés mettent en jeu des phénomènes optiques ou magnétiques. Pour ménager les zones d'enregistrement sur la carte, ou plus généralement sur le support d'informations, on doit modifier la surface du support et, par exemple, dans le cas d'une carte de crédit enregistrée et lue magnétiquement, on y dépose suivant des pistes prédéterminées un matériau ayant des propriétés magnétiques. Les informations numériques codées peuvent également être représentées sous la forme de barres.

Dans un code à barres, un caractère est représenté par une succession de traits et d'espaces perpendiculaires à la direction d'inscription, ces traits et ces espaces étant d'épaisseurs différentes. Chaque caractère possède ainsi son code propre qui ne correspond pas directement à son remplacement par son équivalent binaire. Mais pour la lecture d'un tel code à barres la vitesse de lecture peut être variable (du cm/s au m/s) et le logiciel nécessaire au traitement des informations est complexe et souvent peu fiable. En effet, pour effectuer une lecture correcte, il faut non seulement distinguer les barres des espaces, mais encore, il faut pouvoir distinguer leurs épaisseurs respectives. Les informations à traiter sont alors simultanément de nature spatiale (barres ou espaces) et temporelle (durée de passage du lecteur sur une barre ou sur un espace).

A ces difficultés, il faut ajouter que l'acquisition des informations est fortement dépendante de la qualité de l'impression, car toute "bavure" sur une barre entraînera une erreur de lecture.

Le dispositif d'identification de l'invention présente les avantages suivants :

- Le nombre de symboles disponibles ne dépend que des besoins de l'utilisateur et de la densité spatiale d'informations admissible.

- La vitesse de lecture n'est limitée que par les caractéristiques du lecteur optique et non par le traitement des signaux.

- Le traitement des signaux pour leur lecture, est assuré d'une façon extrêmement simple et fiable.

Le codage du support est aussi d'une très grande simplicité.

Le dispositif d'identification selon l'invention comporte un support sur lequel est inscrit au moins un nombre binaire sous la forme d'une séquence d'états binaires sur deux pistes distinctes, l'une de ces pistes représentant les "1" et l'autre représentant les "0". Ce support est caractérisé en ce que sur chaque piste un chiffre binaire est représenté par une barre, c'est à dire une zone à coefficient optique de réflexion ou de transmission de la lumière de valeur déterminée, différente de la valeur du coefficient correspondant pour les espaces compris entre les barres, les pistes étant disposées de façon telle qu'elles puissent être lues simultanément et, que lors de cette lecture simultanée apparaisse une seule barre sur une seule des deux pistes, et en ce que deux chiffres binaires identiques successifs sont constitués par deux barres successives sur la même piste séparées par un espace.

Pour la lecture de ces informations on fait défiler le support devant deux détecteurs, l'un constituant un lecteur de "1" et l'autre un lecteur de "0". Il n'est pas besoin alors de traiter une information fournie par ces détecteurs car celle-ci représente directement le chiffre binaire : quand le premier détecteur voit une barre cela signifie un chiffre "1" et quand l'autre détecteur voit une barre cela signifie directement un chiffre binaire "0".

Deux barres successives sur une même piste correspondant à deux "1" successifs ou à deux "0" successifs, ne sont pas jointives afin qu'elles puissent être distinguées l'une de l'autre.

Il est vrai que l'on connaît déjà (brevet français 2 409 556) un support d'informations sous forme de barres arrangées suivant deux pistes, la première piste représentant les "0" et la seconde piste représentant les "1". Mais dans ce support connu le codage est du type à transitions, c'est à dire qu'un chiffre binaire est représenté par un passage du noir au blanc ou du blanc au noir, ce qui implique des circuits de traitements relativement complexes. En outre sur ce support connu des barres sur une même piste peuvent être jointives, ce qui oblige à prévoir obligatoirement une transition sur l'autre piste afin de synchroniser la lecture. Le dispositf selon l'invention ne nécessite pas, comme on l'a vu ci-dessus, de moyen de lecture compliqué. En outre le dispositif est d'une fabrication beaucoup plus aisée, le procédé de codage étant très simple.

Deux barres successives sur deux pistes différentes peuvent-être séparées par un espace ou peuvent être jointives.

Dans une réalisation, les deux pistes sont rectilignes et parallèles entre elles. De préférence dans ce cas, les barres ont la même largeur dans la direction des pistes et sont perpendiculaires à cette direction.

Le support a, par exemple, une forme rectangulaire ; dans ce cas il est préférable que les deux pistes soient parallèles à l'un des bords du support et que les barres soient perpendiculaires à la direction de ces pistes.

Les pistes peuvent être soit sur la même face du support, soit sur deux faces distinctes.

Les barres ont par exemple un coefficient de réflexion supérieur à celui des espaces qui les séparent. Ces barres peuvent aussi présenter un coefficient de transmission inférieur à celui des espaces compris entre elles, le support étant transparent.

L'invention a également pour objet un procédé de codage numérique d'un tel support et un organe de lecture, notamment pour une autorisation de fonctionnement, d'un tel support.

Le procédé de codage est caractérisé en ce qu'il comprend une phase de création de deux pistes distinctes sur le support, une phase d'inscription séquentielle des barres sur la première piste et une phase d'inscription des barres sur l'autre piste.

L'organe de lecture comprend deux détecteurs de barres pour chaque piste et, de préférence, un moyen d'emmagasinage tel qu'un micro-processeur pour mémoriser la succession de chiffres binaires, "1" ou "0", lue par chacun des détecteurs.

Un tel organe de lecture peut-être utilisé pour autoriser le fonctionnement d'un appareil. Dans ce cas on prévoit en plus un organe de comparaison du code lu par ledit organe avec un code préétabli lié à l'appareil.

D'autres particularités et avantages de l'invention apparaîtront à l'aide de la description ci-après et des figures annexées parmi lesquelles :

- La figure 1 illustre un support d'information de l'art antérieur.

-La figure 2 montre un support conforme à l'invention,

-la figure 3 est une variante de la figure 2,

-la figure 4 montre un support du type de celui de la figure 3 avec, de façon schématique, un lecteur,

-la figure 5 montre deux diagrammes de variation en fonction du temps des signaux obtenus avec le dispositif de lecture de la figure 4, et

-la figure 6 est un schéma montrant un moyen d'exploitation des signaux de la figure 5.

Le système le plus simple de "code à barres" est sans aucun doute le code deux parmi cinq. Dans ce cas, on se trouve en présence de cinq traits pour représenter un chiffre. Deux parmi ces cinq traits sont plus épais, d'où le nom du code.

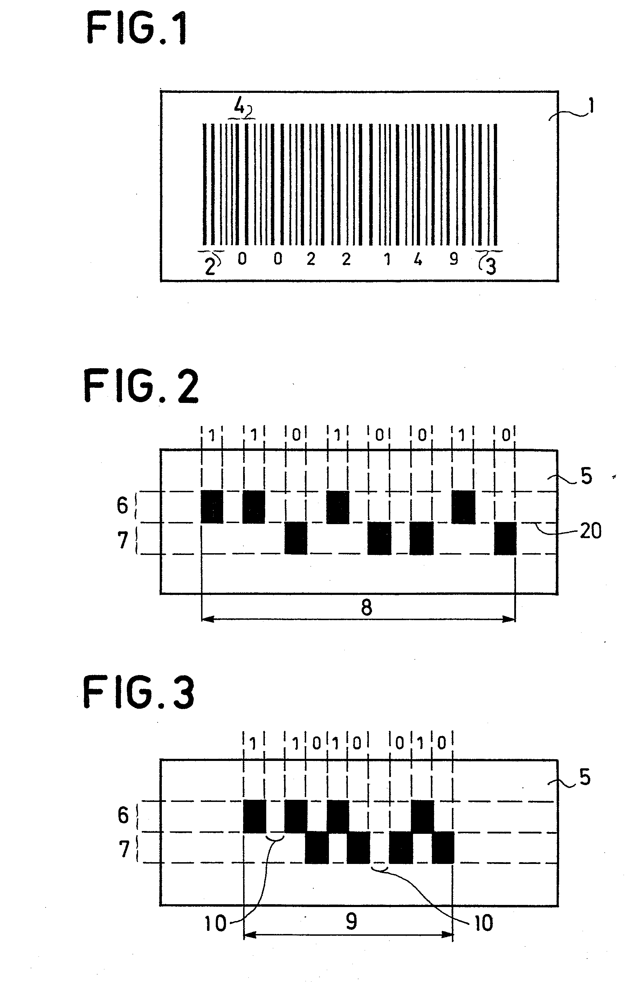

La figure 1 en est un exemple pratique. Les traits fins représentent un "0", les lignes trois fois plus épaisses, un "1". Sur cette figure 1 sous chaque caractère représenté par le code à barres "deux parmi cinq", est inscrit le caractère correspondant, avec les caractères de début 2 et de fin de mots 3. La représentation des chiffres dans ce code est donnée en fin de description au tableau 1.

De nombreux autres codes à barres sont déjà utilisés et le plus complet parmi eux est le code à barres "39" (code alphanumérique), c'est-à-dire "trois parmi neuf".

Avec le code "39", l'utilisateur dispose de 84 symboles :

nombre de symboles $= \frac{9!}{3!\,(9-3)!} = 84$

Le code "39" est un système déjà nettement plus compliqué que le code "deux parmi cinq". Dans ce cas ce sont neuf éléments (traits ou espaces) qui définissent un caractère. Trois de ces éléments sont plus larges que les autres. Ce code représente les chiffres et les lettres ainsi qu'un certain nombre de caractères de lecture. Dans ce code, un "1" est rendu par un trait ou un espace deux fois plus large. L'espace existant entre deux caractères est déterminé de façon très précise : il fera environ la largeur d'un petit espace et demi.

Mais le nombre limité de symboles disponible a une incidence non négligeable sur la densité spatiale d'informations. Il faut remarquer aussi qu'un symbole du code "39" est représenté à l'aide de douze espaces élémentaires car il est composé de neuf éléments (barres ou espaces) dont trois ont une épaisseur double.

Quelque soit son type un code à barres a pour but de permettre la lecture de façon rapide et sûre, d'un certain nombre d'informations, et ceci à l'aide par exemple d'un crayon lumineux qui passera sur les traits (et les blancs bien sûr). Le fait que l'on pilote le crayon avec la main entraîne une mauvaise précision sur la vitesse. En outre, avec les lecteurs connus la vitesse doit être au minimum de 7 cm/s.

L'invention permet de s'affranchir des contraintes liées à la vitesse.

Pour éviter ces différents inconvénients le support d'information sur lequel ont été inscrites les informations suivant le procédé de codage de l'invention permet d'être indépendant de la vitesse de lecture de ces informations présentées sous la forme de code à barres. On peut, d'ailleurs déplacer un crayon optique, ou disposer le support d'informations dans une fente au dessus de laquelle ont été positionnés des dispositifs d'émission et de réception de faisceau lumineux. Ces dispositifs peuvent fonctionner par réflexion, ou par transparence si le support d'informations est transparent.

Le "code à barres double" de l'invention est binaire et se présente sur deux lignes distinctes ; une de ces lignes est une ligne de "1" (6) et l'autre une ligne de "0" (7) (Fig.2).

Sur la figure 2 le mot binaire 11 010 010 a été représenté selon le procédé de l'invention sur un support d'informations 5. Chaque "1" et chaque "0" est un espace élémentaire ou barre rendu opaque sur la ligne ou "piste" correspondante 6 et 7 ; les écarts entre ces barres sont égaux, eux aussi, à cet espace élémentaire. La distance 8 représente donc 15 espaces élémentaires. Ainsi les états logiques "0" et "1" sont représentés par des zones ayant la forme de barres qui ont un coefficient de transmission qui est différent de ceux des espaces compris entre elles. Mais ce sont aussi les coefficients de réflexion qui peuvent êtres différents.

Toute barre sur la ligne 6 représente un "1" logique et toute barre sur la ligne 7 représente un "0" logique.

La densité spatiale d'informations peut être augmentée en réduisant à zéro les écarts entre les barres de la ligne 6 et celles de la ligne 7 comme représenté à la figure 3. La distance 9 représente donc dix espaces élémentaires, deux barres successives représentant deux "1" (ou deux "0") étant séparés par un écart 10, pour être distinguées.

Dans ces conditions, l'espace requis pour représenter un symbole varie de

(2 x Nbre de bits) - 1 à 1 x Nbre de bits espaces élémentaires.

Le nombre de symboles disponibles peut être choisi en fonction des besoins de l'utilisateur et de la densité spatiale admissible.

La densité spatiale du code à barres "39" (douze espaces élémentaires) est équivalente à la densité spatiale moyenne du "code à barres double" de l'invention lorsque ce dernier utilise des mots composés de 8 bits ; mais, dans ce code à deux pistes, le nombre de symboles disponible est trois fois supérieur (256 au lieu de 84). Le tableau 2 montre les possibilités du code de l'invention.

La vitesse de lecture n'est limitée que par le temps de réponse du senseur optique (sensibilité et résolution) car le traitement des signaux n'introduit pas une limitation significative.

Il est important de remarquer qu'avec le code de l'invention, il s'agit uniquement de distinguer, sur chaque ligne, les barres des espaces : les informations se présentent seulement sous la forme de séquences spatiales. L'épaisseur des barres ne jouant pas un rôle fondamental (seule la présence d'une discontinuité est prise en compte), la qualité de l'impression et de son support deviennent des facteurs secondaires.

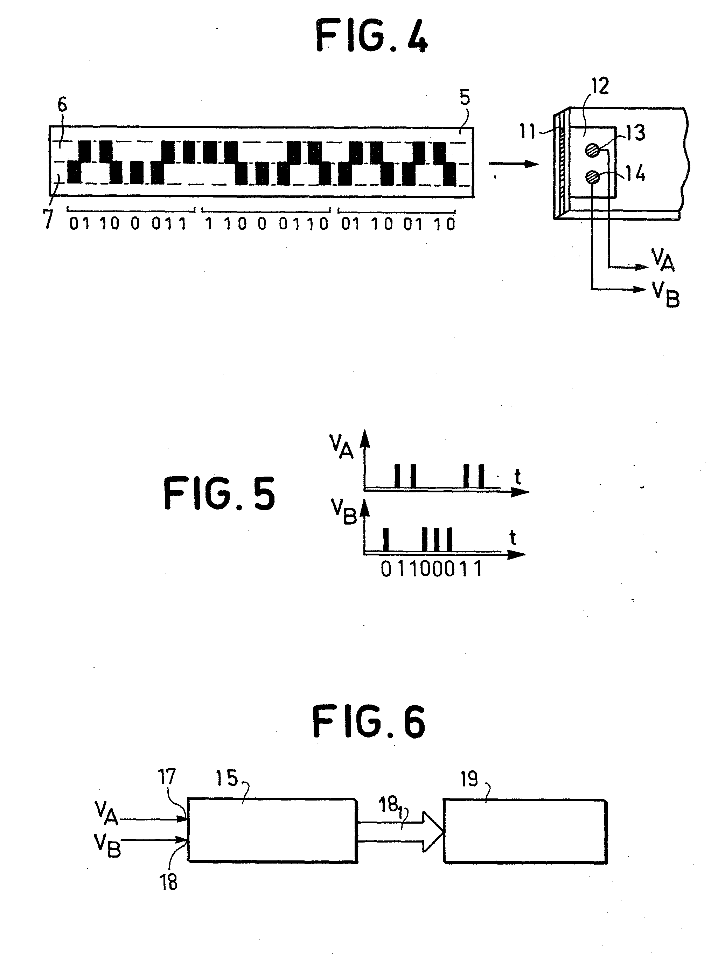

L'acquisition des informations s'effectue de façon particulièrement simple et fiable. En effet, le lecteur 12 (Fig.4) comporte deux organes opto-électroniques de détection, 13 et 14 destinés à lire respectivement les lignes 6 et 7 ; les signaux provenant de ces organes, après une mise en forme appropriée, sont connectés directement aux entrées 'INTERRUPTION" d'un microprocesseur 15 (Fig.6)

Si la carte 5 est transparente et chaque barre est constituée d'une zone opaque, un organe opto-électronique comporte une source lumineuse sur un côté d'une fente 11 et, sur l'autre côté de cette fente 11, un détecteur photo-électrique.

Sur la figure 4 le support d'information de l'invention est représenté avec une succession d'informations : 01 100 011, 11 000 110 et 01 100 110. Le lecteur optique 12 comporte la fente 11 dans laquelle peut être inséré le support 5.

A la sortie des organes de détection 13 et 14 on obtient les signaux $V_A$ et $V_B$ représentés à la figure 5. Ces signaux représentent le nombre binaire 01 100 011.

Ces signaux $V_A$ et $V_B$ sont appliqués sur les entrées interruptions 17 et 18 d'un microprocesseur 15 (figure 6) qui, comme le reste du lecteur 12, fait partie d'un appareil dont le fonctionnement n'est autorisé que si le code inscrit sur le support 5 correspond à un code préétabli inscrit en mémoire de l'appareil. Dans l'exemple ce code préétabli est inscrit en mémoire d'une microprocesseur 15, et ce dernier est également programmé pour comparer le nombre binaire, introduit sur les entrées 17 et 18 et mémorisées, avec le code préétabli inscrit en mémoire de ce microprocesseur 15. Si les deux codes sont identiques, la sortie du microprocesseur 15 produit un signal sur une ligne $18_1$ qui est reliée à un dispositif 19 d'ouverture ou d'autorisation proprement dite.

On voit ainsi qu'il suffit pour la lecture d'un simple microprocesseur 15 sans autre circuit logique supplémentaire.

On remarquera que le temps d'acquisition et de traitement d'une "INTERRUPTION" est de l'ordre de 25 $\mu$s, temps négligeable

vis-à-vis du temps de réponse des senseurs optiques. Le microprocesseur interprète comme des "0" logiques ceux provenant du senseur 14 et comme des "1" logiques ceux provenant du senseur 13. L'utilisation du mot binaire résultant ne dépend que des périphériques choisis. De plus, deux symboles successifs sont séparés et identifiés par simple comptage des interruptions.

Le déclenchement par le microprocesseur est effectué par détection de la première barre.

Le support peut être, par exemple, du format ticket de métro (65 mm X 30 mm environ), ou du format carte de crédit (85 mm x 55 mm environ).

Les deux lignes d'informations 6 et 7 ont été représentées l'une au dessous de l'autre ; cette disposition n'est cependant pas indispensable. Il suffit qu'elles soient distinctes l'une de l'autre et que deux organes de détection puissent les lire toutes deux de façon simultanée. Ainsi dans le cas d'un support plat, les deux pistes peuvent être sur les deux faces opposées. Dans le cas d'un support non plat, les deux pistes peuvent être sur des faces distinctes.

Pour pouvoir effectuer une lecture, il faut que les organes de détection du lecteur soient positionnés correctement par rapport à chaque ligne d'informations codées. Ceci implique un guidage mécanique du support dans le lecteur.Dans l'exemple ce guidage est effectué par les bords de la fente 11. Mais cet inconvénient - le positionnement mécanique du lecteur -devient secondaire, si l'on tient compte des avantages : la gamme de vitesses de balayage possible, le nombre de symboles disponible, la densité spatiale, la rapidité dans l'acquisition des informations et, enfin, la fiabilité du système dûe à son extrême simplicité.

Ce support d'informations est utilisable par exemple dans un système de contrôle d'accès de décodeurs de télévision à péage.

TABLEAU 1

| Caractère | Codes à barres 2 des 5 |
|---|---|
| 0 | 00110 |
| 1 | 10001 |
| 2 | 01001 |
| 3 | 11000 |
| 4 | 00101 |
| 5 | 10100 |
| 6 | 01100 |
| 7 | 00011 |
| 8 | 10010 |
| 9 | 01010 |
| Départ | 110 |
| Arrêt | 010 |

TABLEAU 2

| nombre de bits | nombre d' espaces élémentaires | | nombre de symboles disponibles |
|---|---|---|---|
| | minimum | maximum | |
| 7 | 7 | 13 | 128 |
| 8 | 8 | 15 | 256 |
| 9 | 9 | 17 | 512 |
| 10 | 10 | 19 | 1024 |
| 11 | 11 | 21 | 2048 |
| 12 | 12 | 23 | 4096 |

# REVENDICATIONS

1.Dispositif d'identification se présentant sous la forme d'un support (5) sur lequel est inscrit un nombre binaire avec deux pistes dont l'une (6) représente les "1" et l'autre (7) représente les "0", caractérisé en ce que sur chaque piste un chiffre binaire est représenté par une barre à coefficient optique de transmission ou de réflexion différent du coefficient correspondant pour les espaces compris entre les barres, ces pistes étant disposées de façon qu'elles puissent être lues simultanément et que, lors de cette lecture simultanée, apparaisse une seule barre sur une seule des deux pistes, et en ce que deux chiffres binaires identiques successifs sont constitués par deux barres successives sur la même piste séparées par un espace (10).

2. Dispositif selon la revendication 1, caractérisé en ce que les deux pistes (6,7) sont rectilignes et parallèles entre elles.

3. Dispositif selon la revendication 2, caractérisé en ce que les barres ont la même largeur dans la direction des pistes, et sont perpendiculaires à cette direction.

4. Dispositif selon l'une des revendications 1 à 3, caractérisé en ce qu'il a une forme rectangulaire, les deux pistes (6,7) étant parallèles à l'un des bords du support (5), les barres étant perpendiculaires à la direction des pistes.

5. Dispositif selon la revendication 1, caractérisé en ce que les deux pistes (6,7) sont sur la même face du support (5).

6. Dispositif selon la revendication 1, caractérisé en ce que les pistes sont sur deux faces distinctes.

7. Dispositif selon la revendication 1, caractérisé en ce que les barres ont un coefficient de réflexion supérieur à celui des espaces compris entre elles.

8. Dispositif selon la revendication 1, caractérisé en ce que les barres ont un coefficient de transmission inférieur à celui des espaces compris entre elles, le support étant transparent.

9. Dispositif selon la revendication 2 ou 3 caractérisé en ce que les deux pistes (6,7) ont un côté longitudinal commun (20) et en ce que deux chiffres binaires différents successifs sont représentés par deux barres jointives sur deux pistes différentes.

10. Dispositif selon la revendication 2 ou 3 caractérisé en ce que les deux pistes présentent un bord longitudinal commun (20), et en ce que deux chiffres binaires successifs de valeurs différentes sont représentés par deux barres sur des pistes différentes séparées par un espace.

11. Procédé de codage numérique d'information d'un dispositif selon l'une quelconque des revendications 1 à 10, caractérisé en ce qu'il comprend

- une phase de création de deux pistes distinctes sur le support de ce dispositif,
- une phase d'inscription séquentielle des barres correspondant à l'un des états logiques sur la piste qui lui est associée,
- une phase d'inscription séquentielle des barres correspondant à l'autre état logique sur l'autre piste.

12. Dispositif d'autorisation du fonctionnement d'un appareil à usage réservé carcactérisé en ce qu'il comporte un dispositif d'identification selon l'une quelconque des revendications 1 à 10, un organe de lecture du code inscrit sur le support (5) de ce dispositif d'identification, un organe de mémorisation d'un code préétabli, un organe de comparaison de ces deux codes, un organe d'autorisation du fonctionnement de l'appareil, l'organe de lecture comprenant deux organes opto-électroniques de détection permettant de lire simultanément les deux pistes du support.

13. Appareil de télévision à péage comportant un système de contrôle d'accès de décodeurs caractérisé en ce qu'il comprend un dispositif d'autorisation selon la revendication 12.

14. Dispositif de lecture d'un dispositif d'identification selon l'une quelconque des revendications 1 à 10, caractérisé en ce qu'il comprend deux têtes de lecture (13, 14), une pour chaque piste.

FIG.1

4
1
2
0 0 2 2 1 4 9
3

FIG.2

1 1 0 1 0 0 1 0
5
6
7
20
8

FIG.3

1 1 0 1 0 0 1 0
5
6
7
10
9
10

FIG. 4

6
5
7
01 10 0 011
1 10 0 0110
01 10 01 10
12
11
13
14
$V_A$
$V_B$

FIG. 5

$V_A$

t

$V_B$

t

01100011

FIG. 6

17
15
18
19
$V_A$
$V_B$

0122165

Office européen des brevets

# RAPPORT DE RECHERCHE EUROPEENNE

Numéro de la demande

EP 84 40 0424

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 409 556 (B.S.G. SCHALTTECHNIK) * Figures 11,12; page 27, ligne 9 - page 31, ligne 23; page 1, lignes 1-10 * | 1,13 | G 06 K 19/06<br>G 07 F 7/00 |
| A | | 2-5,7, 11,12, 14 | |
| | --- | | |
| Y | US-A-3 609 306 (GENERAL ELECTRIC) * Figure 1; colonne 1, ligne 68 - colonne 2, ligne 32 * | 1 | |
| A | | 2-5,7, 10,11, 14 | DOMAINES TECHNIQUES RECHERCHES (Int. Cl. 3) |
| | --- | | |
| A | US-A-3 529 133 (HONEYWELL) * Figures 1-4; colonne 6, ligne 15 - colonne 9, ligne 44 * | 2-5,7, 9 | G 06 K 19<br>G 06 K 7<br>G 07 F 7 |
| | --- | | |
| Y | WO-A-8 103 390 (HYATT et al.) * Figures 1,2; page 6, lignes 10-36 * | 13 | |
| | --- | | |
| A | US-A-3 673 389 (COMPUTER IDENTICS) | | |
| | ----- | | |

Le présent rapport de recherche a été établi pour toutes les revendications

| Lieu de la recherche | Date d'achèvement de la recherche | Examinateur |
|---|---|---|
| LA HAYE | 26-06-1984 | FORLEN G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503.03.82